# EUROPEAN PATENT APPLICATION

(11) **EP 4 704 399 A1**
(43) Date of publication of application: **04.03.2026**
(21) Application number: 23936507.5
(22) Date of filing: 29.12.2023
(51) Int. Cl.: H04L 45/50, H04W 40/04

(54) **ROUTE FORWARDING PROCESSING METHOD, APPARATUS, STORAGE MEDIUM AND ELECTRONIC APPARATUS**

(30) Priority: 09.05.2023 CN 202310520860
(71) Applicant: ZTE CORPORATION, Shenzhen, Guangdong 518057 (CN)
(72) Inventor: ZHANG, Yuetong, Shenzhen, Guangdong 518057 (CN); SHU, Ye, Shenzhen, Guangdong 518057 (CN)
(74) Representative: Cristinelli, Luca
(86) International application number: PCT/CN2023/143618
(87) International publication number: WO 2024/230203

(57) **Abstract**

The embodiments of the present invention provide a route forwarding processing method, apparatus, a storage medium, and an electronic device. The method includes: deploying, by a first device, a global first RD offset; generating a first destination RD according to the first RD offset; generating a first VPN route according to the first destination RD, and advertising the first VPN route to a route reflection device, such that the route reflection device reflects both the first VPN route and a second VPN route advertised by a second device to a third device, wherein the second VPN route is different from the first VPN route. The present invention can solve the problem in the related art that the remote end cannot isolate the multicast traffic due to the selective advertisement of the route by the route reflection device, no solution has been proposed. The first device generates a first destination RD by means of a deployed first RD offset, and generates a first VPN route according to the first destination RD, such that VPN routes generated by the first device and the second device are different, and therefore the route reflection device can distinguish routes of different devices and forward all the routes, enabling the remote end to implement isolation of multicast traffic.

## Description

### Cross-Reference to Related Application

The present invention is based on Chinese patent application CN 2023105208607 filed on May 09, 2023 and entitled "Route Forwarding Processing Method, Apparatus, Storage Medium, and Electronic Device", and claims priority to this patent application, the invention of which is incorporated herein by reference in its entirety.

### Technical Field

The embodiments of the present invention relate to the field of communications, and in particular, to a route forwarding processing method and apparatus, a storage medium, and an electronic device.

### Background

The forwarding and filtering rule of an Ethernet Virtual Private Tree (E-TREE) is that no packet is forwarded between leaf nodes, which is a fundamental rule followed by all E-TREE implementations, and this forwarding and filtering rule is referred to as "leaf filtering". The Leaf filtering rule is not only applicable between two local Attachment Circuits (ACs), but also must take effect between a local AC and a remote AC. The current approach is that the ingress PE forms a Leaf label table, and the Leaf-AC uses a Leaf label to carry the leaf attribute to the remote end at the forwarding plane. In MPLS EVPN, an MPLS label is used to achieve this purpose, while in SRv6 EVPN, the args field of a Segment ID (SID) is used to achieve this purpose. A packet carrying a Leaf label indicates that it originated from a remote Leaf site, and therefore, it must not be forwarded to any local Leaf site.

A Leaf label table is formed on the basis of the EVPN Ethernet Auto-discovery per Ethernet Segment Route (RT-1 per-ES) advertised by the remote end. Currently, the RT-1 per-ES routes use the same prefix, namely, an Ethernet Tag ID (ETI) of 4294967295 and an Ethernet Segment ID (ESI) of 0. Consequently, when a Route Reflector (RR) device is present in the network, optimal route selection and advertisement occur for BGP routes, leading to only one RT-1 per-ES route being successfully advertised. This prevents the formation of a complete Leaf label table, resulting in the failure of multicast traffic isolation at the remote end.

Aiming at the problem in the related art that the remote end cannot isolate the multicast traffic due to the selective advertisement of the route by the route reflection device, no solution has been proposed.

### Summary

The embodiments of the present invention provide a route forwarding processing method, apparatus, a storage medium, and an electronic device, so as to at least solve the problem in the related art that a route reflection device's optimal route selection and advertisement lead to the failure of multicast traffic isolation at the remote end.

According to an embodiment of the present invention, a route forwarding processing method is provided. The method includes:
deploying, by a first device, a global first Route-Distinguisher (RD) offset;
generating, by the first device, a first destination RD according to the first RD offset;
generating, by the first device, a first Virtual Private Network (VPN) route according to the first destination RD; and
advertising, by the first device, the first VPN route to a route reflection device, such that the route reflection device reflects both the first VPN route and a second VPN route advertised by a second device to a third device, wherein the second VPN route is different from the first VPN route.

According to another embodiment of the present invention, a route processing method is further provided. The method includes:
receiving, by a route reflection device, a first virtual private network (VPN) route advertised by a first device, wherein the first VPN route is generated by the first device according to a first destination RD, and the first destination RD is generated by the first device according to a deployed global first RD offset; and
reflecting, by the route reflection device, both the first VPN route and a second VPN route advertised by a second device to a third device, wherein the second VPN route is different from the first VPN route.

According to another embodiment of the present invention, a route forwarding processing apparatus is further provided, which is applied to a first device. The apparatus includes:
a deployment module, configured to deploy a global first RD offset;
a first generation module, configured to generate a first destination RD according to the first RD offset;
a second generation module, configured to generate a first VPN route according to the first destination RD; and
an advertisement module, configured to advertise the first VPN route to a route reflection device, such that the route reflection device reflects both the first VPN route and a second VPN route advertised by a second device to a third device, wherein the second VPN route is different from the first VPN route.

According to another embodiment of the present invention, a route processing apparatus is further provided, which is applied to a route reflection device. The apparatus includes:
a route receiving module, configured to receive a first virtual private network (VPN) route advertised by a first device, wherein the first VPN route is generated by the first device according to a first destination RD, and the first destination RD is generated by the first device according to a deployed global first RD offset; and
a transmission module, configured to reflect both the first VPN route and a second VPN route advertised by a second device to a third device, wherein the second VPN route is different from the first VPN route.

According to still another embodiment of the present invention, a computer-readable storage medium is further provided, a computer program is stored in the computer readable storage medium, wherein the computer program is configured to cause, when executed by a processor, the processor to perform the steps in any one of the described method embodiments.

According to still another embodiment of the present invention, an electronic device is further provided, including a memory and a processor, a computer program that is stored in the memory, and the processor is configured to execute the computer program to perform the steps in any one of the described method embodiments.

### Brief Description of the Drawings

Fig. 1 is a hardware structural block diagram of a computer device for a route forwarding processing method according to an embodiment of the present invention;
Fig. 2 is a first flowchart of a route forwarding processing method according to an embodiment of the present invention;
Fig. 3 is a second flowchart of a route forwarding processing method according to an embodiment of the present invention;
Fig. 4 is a schematic diagram of multicast traffic isolation according to an embodiment;
Fig. 5 is a first block diagram of a route forwarding processing apparatus according to an embodiment of the present invention;
Fig. 6 is a second block diagram of a route forwarding processing apparatus according to an embodiment of the present invention.

### Detailed Description of the Embodiments

The embodiments of the present invention will be described below in detail with reference to the drawings and in conjunction with the embodiments.

It should be noted that, terms such as "first" and "second" in the description and the claims of the present invention and the described drawings are used to distinguish similar objects, but are not necessarily used to describe a specific sequence or order.

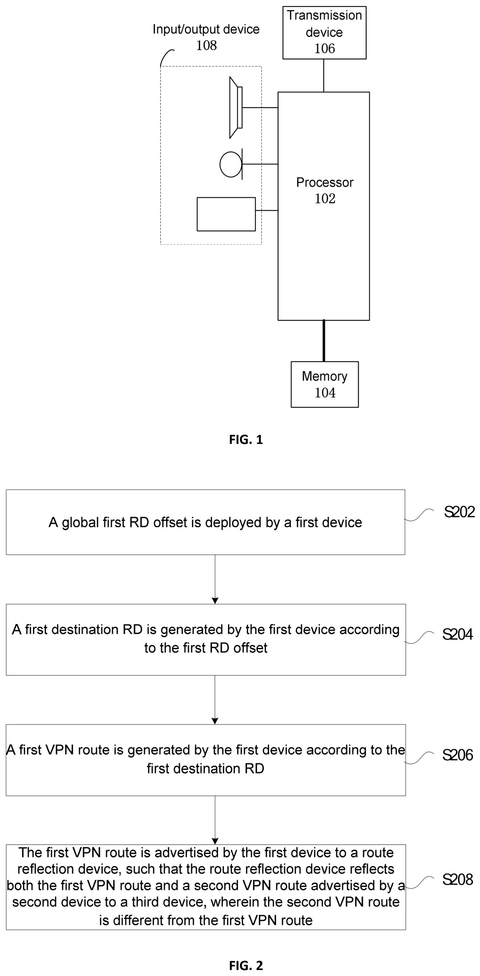

The method embodiments provided in the embodiments of the present invention may be implemented in a computer device or a similar computing means. By taking running on a computer device as an example, Fig. 1 is a hardware structural block diagram of a computer device for a route forwarding processing method according to an embodiment of the present invention. As shown in Fig. 1, the computer device may include one or more (only one is shown in Fig. 1) processors 102 (the processors 102 may include but are not limited to processing means such as a micro controller unit (MCU) or a programmable logic device) and a memory 104 for storing data, wherein the computer device may further include a transmission device 106 for a communication function and an input/output device 108. A person of ordinary skill in the art may understand that the structure shown in Fig. 1 is merely exemplary, which does not limit the structure of the computer device. For example, the computer device may also include components more or less than that shown in Fig. 1, or have a configuration different from that shown in Fig. 1.

The memory 104 may be configured to store a computer program, for example, a software program and a module of application software, such as a computer program corresponding to the route forwarding processing method in the embodiment of the present invention. The processor 102 runs the computer program stored in the memory 104, so as to execute various function applications and route forwarding processing, i.e. implement the described method. The memory 104 may include a high-speed random access memory, and may also include a non-volatile memory, such as one or more magnetic storage means, flash memory, or other non-volatile solid-state memory. In some examples, the memory 104 may further include a memory configured remotely relative to the processor 102, and the remote memory may be connected to the computer device over a network. Examples of the described network include, but are not limited to, the Internet, intranets, local area networks, mobile communication networks, and combinations thereof.

The transmission device 106 is configured to receive or transmit data via a network. Specific examples of the described network may include a wireless network provided by a communication provider of the computer device. In an example, the transmission device 106 includes a Network Interface Controller (NIC) that may be coupled to other network devices via a base station to communicate with the Internet. In an example, the transmission device 106 may be a Radio Frequency (RF) module configured to wirelessly communicate with the Internet.

This embodiment provides a route forwarding processing method running on the computer device. Fig. 2 is a first flowchart of a route forwarding processing method according to an embodiment of the present invention. As shown in Fig. 2, the flow includes the following steps:
Step S202: a global first RD offset is deployed by a first device.

In this embodiment, step S202 may specifically include: the first RD offset is deployed by the first device according to a received touch control instruction, that is, the user manually deploys the first RD offset, and a second RD offset in this embodiment may also be manually deployed; or the first RD offset is generated by the first device according to a device identifier of the first device, wherein the device identifier may specifically be an identifier that can uniquely identify the device, such as a MAC address, and the second RD offset is generated according to a device identifier of a second device, that is, first RD offsets generated by different PE devices are different.

Step S204: a first destination RD is generated by the first device according to the first RD offset.

In this embodiment, step S204 may specifically include: in a case where an RD has been deployed for a VPN instance, the first destination RD is generated by the first device according to a deployed initial RD and the first RD offset, wherein the second VPN route is generated by the second device according to a second destination RD, the second destination RD is generated by the second device according to the initial RD, alternatively, the second destination RD is generated by the second device according to the initial RD and a second RD offset, and the second RD offset is different from the first RD offset, as the first RD offset and the second RD offset are different, even if the initial RDs are the same, the generated first destination RD and the generated second destination RD are also different; in the case where no RD has been deployed for a VPN instance, the first destination RD is generated by the first device according to the first RD offset, wherein the second destination RD is generated by the second device according to the second RD offset, as the first RD offset and the second RD offset are different, the generated first destination RD and the generated second destination RD are different.

Step S206: a first VPN route is generated by the first device according to the first destination RD.

In this embodiment, step S206 may specifically include: the first VPN route is generated by the first device according to the first destination RD, an **ETI** of the route prefix, and an ESI of the route prefix, wherein the second VPN route is generated by the second device according to a second destination RD, the **ETI** of the route prefix, and the ESI of the route prefix, and the second destination RD is generated by the second device according to a deployed global second RD offset; as the first destination RD and the second destination RD are different, values of the first VPN route and the second VPN route which are generated on the basis of the same **ETI** of the route prefix and ESI of the route prefix are different, helping the route reflection device to distinguish the routes from different devices.

Step S208: the first VPN route is advertised by the first device to a route reflection device, such that the route reflection device reflects both the first VPN route and a second VPN route advertised by a second device to a third device, wherein the second VPN route is different from the first VPN route.

By means of steps S202 to S208, the present invention can solve the problem that the remote end cannot isolate the multicast traffic due to the selective advertisement of the route by the route reflection device. The first device generates a first destination RD by means of a deployed first RD offset, and generates a first VPN route according to the first destination RD, such that VPN routes generated by the first device and the second device are different, and therefore the route reflection device can distinguish routes of different devices and advertise all the routes, enabling the remote end to implement isolation of multicast traffic.

In an optional embodiment, after step S208, the method further includes: a multicast packet forwarded by a third device according to a Leaf label table is received by the first device by means of the route reflection device, wherein the multicast packet carries Leaf labels, where the Leaf label table is generated by the third device according to route Leaf label fields carried in the first VPN route and the second VPN route, the Leaf label table includes a first entry and a second entry, the first entry has a neighbor as an address of the first device, and a label as a Leaf label of the first device, and the second entry has a neighbor as an address of the second device, and a label as a Leaf label of the second device; and in the case where it is determined that a Leaf attribute is locally deployed, the multicast packet is discarded by the first device.

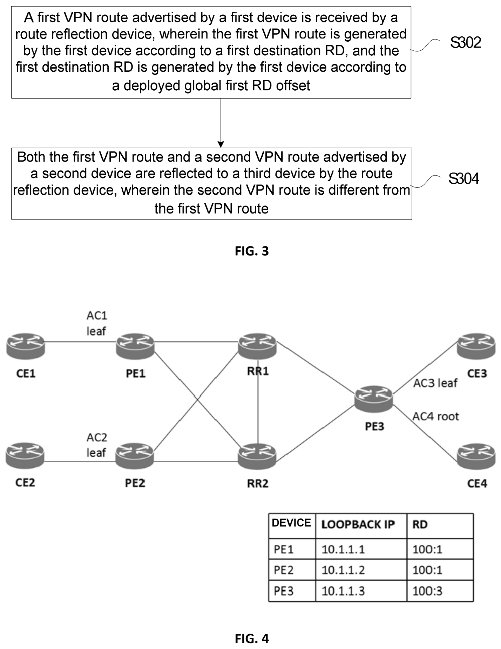

Another embodiment of the present invention further provides a route processing method. Fig. 3 is a second flowchart of a route forwarding processing method according to an embodiment of the present invention. As shown in Fig. 3, the flow includes the following steps:
Step S302: a first VPN route advertised by a first device is received by a route reflection device, wherein the first VPN route is generated by the first device according to a first destination RD, and the first destination RD is generated by the first device according to a deployed global first RD offset.
Step S304: both the first VPN route and a second VPN route advertised by a second device are reflected to a third device by the route reflection device, wherein the second VPN route is different from the first VPN route.

By means of steps S302 to S304, the present invention can solve the problem in the related art that the remote end cannot isolate the multicast traffic due to the selective advertisement of the route by the route reflection device. The first device generates a first destination RD by means of a deployed first RD offset, and generates a first VPN route according to the first destination RD, such that VPN routes generated by the first device and the second device are different, and therefore the route reflection device can distinguish routes of different devices and forward all the routes, enabling the remote end to implement isolation of multicast traffic.

In an embodiment, the third device is configured to generate, according to route Leaf label fields carried in the first VPN route and the second VPN route, a Leaf label table used for multicast packet forwarding, wherein the Leaf label table includes a first entry and a second entry, the first entry has a neighbor as an address of the first device, and a label as a Leaf label of the first device, and the second entry has a neighbor as an address of the second device, and a label as a Leaf label of the second device.

In an embodiment, after step S304, the method further includes: a multicast packet forwarded by the third device according to the Leaf label table is received by the route reflection device, wherein the multicast packet carries Leaf labels; and the route reflection device sends the multicast packet to the first device and the second device, such that the first device and the second device discard the multicast packet in the case where it is determined that a Leaf attribute is locally deployed.

The following describes the embodiments of the present invention in detail by taking an example that the first device is a PE1, the second device is a PE2, the third device is a PE3, and the route reflection device is an RR device.

In this embodiment, multicast traffic isolation can be implemented, a global offset is configured or automatically generated on a device, and a VPN instance may convert a VPNID or an RD of the instance into a new RD according to this offset. This allows for the distinguishing of RDs without the need for additional deployment planning, thereby solving the problem of multicast traffic isolation.

When an RD has been deployed for a VPN instance, Fig. 4 is a schematic diagram of multicast traffic isolation according to an embodiment. As shown in Fig. 4, the same RD is deployed for VPN instances of a PE1 device and a PE2 device. When the PE1 and the PE2 have routes with the same prefix, and both need to advertise these routes to the PE3, includes the following steps:
Step 1: a global RD offset is deployed on the PE1; there are two modes for deploying the RD offset, the first one is a manual deployment mode: manually configuring on a device according to the planned offset (different devices have different planned offsets); the second one is automatic deployment mode: enabling an RD offset automatic deployment switch, and automatically generating an RD offset on the basis of a unique identifier of a device (for example, a MAC address of the device may be used).
Step 2: a conversion switch is enabled for the VPN instance of the PE1, and the RD of the VPN is calculated according to a certain rule based on the global RD offset (for example, calculation may be performed by directly performing operations such as AND, OR, addition, or XOR) to generate a new RD.

The PE1 generates, according to the new RD, a VPN route and advertises same to the RR device; the RR device receives the route advertised by the PE1 device, with the RD being the new RD; meanwhile, the RR device also receives the route advertised by the PE2 device, with the RD being the original RD. In the BGP protocol, one route is identified according to an RD and a route prefix, and therefore, if two routes have the same prefix but different RDs, the RR device considers that the two routes are different, and reflects the two routes to the PE3, such that a complete entry is generated on the PE3, thereby solving the problem of isolation.

On the PE1 device, a global RD offset may be manually deployed according to planning, and an automatic generation switch may also be enabled to automatically generate a global RD offset according to a unique identifier of the device such as a MAC address.

A conversion switch is enabled for the VPN instance of the PE1, such that an RD value of an EVPN RT-1 per-ES route advertised by the PE1 is a new RD value, thereby solving the described problem of traffic isolation. The specific operations are as follows:
Assuming that the generated RD offset is 100:0, the offset may be directly added to the original RD value (100:1) (the calculation solution is not limited thereto), so as to obtain that the new RD of the EVPN E-TREE instance of the PE1 is 200:1; the RD of the advertised EVPN RT-1 per-ES route is 200:1, the ETI of the route prefix is 4294967295, the ESI of the route prefix is 0, the nexthop field of the route is the PE1's loopback interface address 10.1.1.1, and the Leaf Label field of the route is the locally allocated Leaf Label; the route will be advertised to the RR device.

In this case, the RR device receives the EVPN RT-1 per-ES routes advertised by the PE1 and the PE2, the ETI and ESI values of the tunnel route prefixes are the same, but the RDs are different, the BGP protocol considers that the prefixes are different, and both the two routes are reflected to the PE3.

The PE3 receives the EVPN RT-1 per-ES routes reflected by the RR, and generates a Leaf label table according to the nexthop field and the Leaf Label field of the routes; two entries are generated for the Leaf label table; the neighbor of the entry 1 is the address 10.1.1.1 of the PE1, and the label is the Leaf Label1 of the PE1; the neighbor of the entry 2 is the address 10.1.1.2 of the PE2, and the label is the Leaf Label2 of the PE2.

When receiving a multicast packet, an AC3 side of the PE3 queries a broadcast member table of the VPLS to query broadcast members (there are PE1 and PE2 in the member table); as the Leaf attribute is deployed on the AC3 side, the PE3 proceeds to query the Leaf label table, and member addresses in the broadcast member table are matched with neighbor addresses in the Leaf label table; the multicast packet received by the AC3 interface on the PE3 carries a Leaf label when sent to the PE1 and the PE2; at this time, the PE1 and the PE2 both receive the packet with the Leaf label, and discard the packet when it is found that the Leaf attribute is also deployed on the local AC1 and AC2, thereby solving the issue of duplicate packets, improving the network isolation and security, and reducing the consumption of network resources.

When no RD has been deployed for a VPN instance, if the PE1 device in the network does not want to plan the RD but want to automatically deploy the RD, includes the following steps:
Step 1: a global RD offset and an RD format are deployed on the PE1; the deployment modes of the RD offset are the same as the above; meanwhile, for the format of the automatically generated RD, the present invention may also control same by means of configuration.
Step 2: a conversion switch is enabled for the VPN instance of the PE1, and the RD of the VPN is calculated according to a certain rule based on the global RD offset and VPNID of the VPN (for example, calculation may be performed by directly performing operations such as AND, OR, addition, or XOR) to generate an RD according to the RD format.

The PE1 generates, according to the new RD, a VPN route and advertises same to the RR device; the RR device receives the VPN route advertised by the PE1 device, reflects the route to the PE3 device, and forms a route table entry on the PE3 device, thereby achieving the effect of simplifying configuration in a network while solving the problem of isolation.

On the PE1 device, there is no need to deploy an RD for the VPN instance; by only deploying a global RD offset and an RD format, and enabling the conversion switch for the VPN instance of the PE1, a new RD can be automatically generated for the VPN instance, so that an EVPN RT-hyper-ES route notified by the PE1 newly generates an RD value, thereby solving the described problem of traffic isolation. The specific operations are as follows:
Assuming that the generated offset is 300:0, and the RD format is XXX:XXX; the VPNID of the EVPN E-TREE instance of the PE1 is 1; the offset is directly added to the original VPNID value (the calculation solution is not limited thereto), and the generated RD value is 300:1; the RD of the advertised EVPN RT-1 per-ES route is 300:1, the ETI of the route prefix is 4294967295, the ESI of the route prefix is 0, the nexthop field of the route is the PE1's loopback interface address 10.1.1.1, and the Leaf Label field of the route is the locally allocated Leaf Label; this route will be advertised to the RR device.

After the route is advertised to the RR, for the operations of the RR and the PE3, reference can be made to the steps of example above, and the effect of discarding the packet on the PE1 and the PE2 is finally achieved, thereby solving the issue of duplicate packets, improving the network isolation and security, and reducing the consumption of network resources.

This embodiment introduces the scheme for automatic deployment of RDs, and introduces an offset under an original RD basis to transform the RD value of an instance into another RD value according to a certain rule, allowing for the distinguishing of RDs without the need for additional deployment planning, thereby solving the problem of multicast traffic isolation.

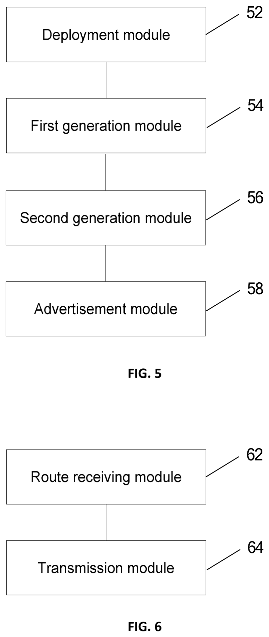

Another embodiment of the present invention further provides a route forwarding processing apparatus. Fig. 5 is a first block diagram of a route forwarding processing apparatus according to an embodiment of the present invention. As shown in Fig. 5, the apparatus is applied to a first device. The apparatus includes:
a deployment module 52, configured to deploy a global first RD offset;
a first generation module 54, configured to generate a first destination RD according to the first RD offset;
a second generation module 56, configured to generate a first VPN route according to the first destination RD; and
an advertisement module 58, configured to advertise the first VPN route to a route reflection device, such that the route reflection device reflects both the first VPN route and a second VPN route advertised by a second device to a third device, wherein the second VPN route is different from the first VPN route.

In an embodiment, the first generation module 54 is further configured to, in a case where an RD has been deployed for a VPN instance, generate the first destination RD according to a deployed initial RD and the first RD offset, wherein the second VPN route is generated by the second device according to a second destination RD, the second destination RD is generated by the second device according to the initial RD, alternatively, the second destination RD is generated by the second device according to the initial RD and a second RD offset, and the second RD offset is different from the first RD offset; and in the case where no RD has been deployed for a VPN instance, generate the first destination RD according to the first RD offset, wherein the second VPN route is generated by the second device according to a second destination RD, and the second destination RD is generated by the second device according to the second RD offset.

In an embodiment, the second generation module 56 is further configured to generate the first VPN route according to the first destination RD, an Ethernet tag ID (ETI) of the route prefix, and an Ethernet segment ID (ESI) of the route prefix, wherein the second VPN route is generated by the second device according to a second destination RD, the ETI of the route prefix, and the ESI of the route prefix, and the second destination RD is generated by the second device according to a deployed global second RD offset.

In an embodiment, the apparatus further includes:
a first packet receiving module, configured to receive, by means of the route reflection device, a multicast packet forwarded by a third device according to a Leaf label table, wherein the multicast packet carries Leaf labels, where the Leaf label table is generated by the third device according to route Leaf label fields carried in the first VPN route and the second VPN route, the Leaf label table includes a first entry and a second entry, the first entry has a neighbor as an address of the first device, and a label as a Leaf label of the first device, and the second entry has a neighbor as an address of the second device, and a label as a Leaf label of the second device; and
a discarding module, configured to, in the case where it is determined that a Leaf attribute is locally deployed, discard the multicast packet.

In an embodiment, the deployment module 52 is further configured to deploy the first RD offset according to a received touch control instruction; or generate the first RD offset from a device identifier.

Another embodiment of the present invention further provides a route processing apparatus. Fig. 6 is a second block diagram of a route forwarding processing apparatus according to an embodiment of the present invention. As shown in Fig. 6, the apparatus is applied to a route reflection device. The apparatus includes:
a route receiving module 62, configured to receive a first VPN route advertised by a first device, wherein the first VPN route is generated by the first device according to a first destination RD, and the first destination RD is generated by the first device according to a deployed global first RD offset; and
a transmission module 64, configured to reflect both the first VPN route and a second VPN route advertised by a second device to a third device, wherein the second VPN route is different from the first VPN route.

In an embodiment, the third device is configured to generate, according to route Leaf label fields carried in the first VPN route and the second VPN route, a Leaf label table used for multicast packet forwarding, wherein the Leaf label table includes a first entry and a second entry, the first entry has a neighbor as an address of the first device, and a label as a Leaf label of the first device, and the second entry has a neighbor as an address of the second device, and a label as a Leaf label of the second device.

In an embodiment, the apparatus further includes:
a second packet receiving module, configured to receive a multicast packet forwarded by the third device according to the Leaf label table, wherein the multicast packet carries Leaf labels; and
a sending module, configured to send the multicast packet to the first device and the second device, such that the first device and the second device discard the multicast packet in the case where it is determined that a Leaf attribute is locally deployed.

The embodiments of the present invention further provide a computer-readable storage medium, a computer program is stored in the computer readable storage medium, wherein the computer program is configured to cause, when executed by a processor, the processor to perform the steps in any one of the described method embodiments.

In an exemplary embodiment, the computer-readable storage medium may include, but is not limited to, any medium that can store a computer program, such as a USB flash disk, a Read-Only Memory (ROM), a Random Access Memory (RAM), a mobile hard disk, a magnetic disk, or an optical disk.

The embodiments of the present invention further provide an electronic device, including a memory and a processor, a computer program that is stored in the memory, and the processor is configured to execute the computer program to perform the steps in any of the described method embodiments.

In an exemplary embodiment, the electronic device may further include a transmission device and an input/output device, wherein the transmission device is connected to the processor, and the input/output device is connected to the processor.

For specific examples in this embodiment, reference may be made to the examples described in the foregoing embodiments and exemplary implementations, and details are not repeatedly described in this embodiment.

Obviously, those skilled in the art should understand that various modules or various steps in the embodiments of the present invention can be implemented by a universal computing means, and the various modules or steps can be integrated on a single computing means or distributed over a network formed by a plurality of computing means, and can be implemented by program codes executable by the computing means, such that the modules or steps can be stored in a storage means and executed by the computing means, and the shown or described steps can be executed in sequences different from those described here in some cases, or the various modules or steps can be implemented by manufacturing the modules or steps into various integrated circuit modules respectively, or manufacturing multiple modules or steps among the various modules or steps into a single integrated circuit module. Thus, the present invention is not limited to any particular combination of hardware and software.

The foregoing descriptions are merely preferred embodiments of the present invention, and are not intended to limit the present invention. For those skilled in the art, the present invention may have various modifications and variations. Any modifications, equivalent replacements, improvements and the like made within the principle of the present invention shall belong to the scope of protection of the present invention.

## Claims

1. A route forwarding processing method, comprising:
deploying, by a first device, a global first Route-Distinguisher ,RD, offset;
generating, by the first device, a first destination RD according to the first RD offset;
generating, by the first device, a first Virtual Private Network ,VPN, route according to the first destination RD; and
advertising, by the first device, the first VPN route to a route reflection device, such that the route reflection device reflects both the first VPN route and a second VPN route advertised by a second device to a third device, wherein the second VPN route is different from the first VPN route.

2. The method according to claim 1, wherein generating, by the first device, a first destination RD according to the first RD offset comprises:
in a case where an RD has been deployed for a VPN instance, generating, by the first device, the first destination RD according to a deployed initial RD and the first RD offset, wherein the second VPN route is generated by the second device according to a second destination RD, the second destination RD is generated by the second device according to the initial RD, or, the second destination RD is generated by the second device according to the initial RD and a second RD offset, and the second RD offset is different from the first RD offset; and
in a case where no RD has been deployed for a VPN instance, generating, by the first device, the first destination RD according to the first RD offset, wherein the second VPN route is generated by the second device according to a second destination RD, and the second destination RD is generated by the second device according to the second RD offset.

3. The method according to claim 1, wherein generating, by the first device, a first Virtual Private Network ,VPN, route according to the first destination RD comprises:
generating, by the first device, the first VPN route according to the first destination RD, an Ethernet Tag ID ,ETI, of the route prefix, and an Ethernet Segment ID ,ESI, of the route prefix, wherein the second VPN route is generated by the second device according to a second destination RD, the **ETI** of the route prefix, and the ESI of the route prefix, and the second destination RD is generated by the second device according to a deployed global second RD offset.

4. The method according to claim 1, wherein after advertising, by the first device, the first VPN route to a route reflection device, the method further comprises:
receiving, by the first device, a multicast packet forwarded by a third device according to a Leaf label table by means of the route reflection device, wherein the multicast packet carries Leaf labels, where the Leaf label table is generated by the third device according to route Leaf label fields carried in the first VPN route and the second VPN route, the Leaf label table comprises a first entry and a second entry, the first entry has a neighbor as an address of the first device, and a label as a Leaf label of the first device, and the second entry has a neighbor as an address of the second device, and a label as a Leaf label of the second device; and
in a case where it is determined that a Leaf attribute is locally deployed, discarding, by the first device, the multicast packet.

5. The method according to any one of claims 1 to 4, wherein deploying, by the first device, a global first Route-Distinguisher ,RD, offset comprises:
deploying, by the first device, the first RD offset according to a received touch control instruction; or
generating, by the first device, the first RD offset according to a device identifier.

6. A route processing method, comprising:
receiving, by a route reflection device, a first Virtual Private Network ,VPN, route advertised by a first device, wherein the first VPN route is generated by the first device according to a first destination Route-Distinguisher ,RD, and the first destination RD is generated by the first device according to a deployed global first RD offset; and
reflecting, by the route reflection device, both the first VPN route and a second VPN route advertised by a second device to a third device, wherein the second VPN route is different from the first VPN route.

7. The method according to claim 6, wherein
the third device is configured to generate, according to route Leaf label fields carried in the first VPN route and the second VPN route, a Leaf label table used for multicast packet forwarding, wherein the Leaf label table comprises a first entry and a second entry, the first entry has a neighbor as an address of the first device, and a label as a Leaf label of the first device, and the second entry has a neighbor as an address of the second device, and a label as a Leaf label of the second device.

8. The method according to claim 7, wherein after reflecting, by the route reflection device, both the first VPN route and a second VPN route advertised by a second device to a third device, the method further comprises:
receiving, by the route reflection device, a multicast packet forwarded by the third device according to the Leaf label table, wherein the multicast packet carries Leaf labels; and
sending, by the route reflection device, the multicast packet to the first device and the second device, such that the first device and the second device discard the multicast packet in the case where it is determined that a Leaf attribute is locally deployed.

9. A route forwarding processing apparatus, located at a first device, the apparatus comprising:
a deployment module, configured to deploy a global first Route-Distinguisher ,RD, offset;
a first generation module, configured to generate a first destination RD according to the first RD offset;
a second generation module, configured to generate a first Virtual Private Network ,VPN, route according to the first destination RD; and
an advertisement module, configured to advertise the first VPN route to a route reflection device, such that the route reflection device reflects both the first VPN route and a second VPN route advertised by a second device to a third device, wherein the second VPN route is different from the first VPN route.

10. A route processing apparatus, located at a route reflection device, the apparatus comprising:
a route receiving module, configured to receive a first Virtual Private Network ,VPN, route advertised by a first device, wherein the first VPN route is generated by the first device according to a first destination Route-Distinguisher ,RD, and the first destination RD is generated by the first device according to a deployed global first RD offset; and
a transmission module, configured to reflect both the first VPN route and a second VPN route advertised by a second device to a third device, wherein the second VPN route is different from the first VPN route.

11. A computer-readable storage medium, a computer program is stored in the computer readable storage medium, wherein the computer program is configured to cause, when executed by a processor, the processor to perform the method as claimed in any one of claims 1 to 5 and claims 6 to 8.

12. An electronic device, comprising a memory and a processor, a computer program is stored in the memory, and the processor is configured to execute the computer program to perform the method as claimed in any one of claims 1 to 5 and claims 6 to 8.
